# EUROPEAN PATENT SPECIFICATION

(11) **EP 3 326 832 B1**
(45) Date of publication and mention of the grant of the patent: **06.04.2022**
(21) Application number: 17209888.1
(22) Date of filing: 14.11.2013
(51) Int. Cl.: B42D 25/324, B42D 25/328, B42D 25/30, B42D 25/36, B42D 25/373, B42D 25/40, B42D 25/425, B42D 25/445, G02B 5/08, G02B 5/18

(54) **COUNTERFEIT PREVENTION STRUCTURE AND MANUFACTURING METHOD THEREFOR**
FÄLSCHUNGSSCHUTZSTRUKTUR UND HERSTELLUNGSVERFAHREN DAFÜR
STRUCTURE DE PRÉVENTION DE LA CONTREFAÇON ET SON PROCÉDÉ DE FABRICATION

(30) Priority: 19.11.2012 JP 2012253291
(43) Date of publication of application: 30.05.2018
(62) Divisional of application: 13855630.3
(73) Proprietor: Toppan Printing Co., Ltd., Taito-ku, Tokyo 110-0016 (JP)
(72) Inventor: YASHIKI, Kazuhiro, Tokyo, 110-0016 (JP)
(74) Representative: Plasseraud IP

(56) References cited:
- EP-A1- 2 444 826
- EP-A2- 1 972 462
- WO-A1-2009/083151
- WO-A1-2011/057739
- WO-A2-2008/017362

## Description

### [Technical Field]

The present invention relates to a counterfeit prevention structure having an effect, for example, of preventing counterfeit, and a manufacturing method therefor.

### [Background Art]

Counterfeit prevention structures are included in labels or transfer foils used for preventing counterfeit such as of valuable certificates or brand products, certificates, or personal authentication media, and have a function of proving that the products, certificates or media are genuine.

It is a recent trend to use counterfeit prevention structures each of which utilizes an optical element, such as a diffraction grating, a hologram, or a lens array, which exerts a special optical effect of enabling a quick visual identification. Such an optical element has a very fine and complicated structure and requires an expensive manufacturing facility, and hence has a high effect of preventing counterfeit.

Also, for the purpose of further enhancing the effect of preventing counterfeit, some counterfeit prevention structures in use each include a patterned reflective layer in a part of a surface of the optical element. For example, a reflective layer of a reflection-type diffraction grating is molded into micro letters to have the diffraction grating exerted a color change effect in the micro letters.

In particular, it is quite difficult to arrange a patterned reflective layer onto a surface relief configuration such as of a diffraction grating, a hologram or a lens array, with a positional accuracy of not more than 50 µm (microns). Therefore, counterfeiting such a counterfeit prevention structure is quite difficult.

Patent Literature 1 discloses a photolithography method as a method of providing a patterned reflective layer on a diffraction grating. According to this method, a reflective layer of high definition can be provided at a comparatively high speed.

Nevertheless, the above method also suffers from a difficulty in providing a reflective layer on a relief configuration of a diffraction structure with good positional accuracy. For example, in providing a reflective layer to a relief configuration of a partially provided diffraction structure by targeting only the diffraction structure portion, a mask is used for a pattern exposure. In this case, the mask is required to be strictly arranged in position relative to the position of the relief configuration of the diffraction structure. Such a manufacturing method has a problem of causing misalignment of not less than 100 µm (microns).

As a measure against such problems, Patent Literature 2 discloses a method of obtaining a reflective layer with good positional accuracy, making use of a difference in the electromagnetic wave transmittance between a portion having a high depth-to-width ratio that is a ratio of a depth to a width, and a flat portion. Especially, the method recited in claim 2 of Patent Literature 2 is estimated to achieve a partial reflective layer with good productivity.

For example, according to the method, a metal reflective layer is provided, by means of a vacuum vapor deposition method, to a structure having an "area of a high depth-to-width ratio (depth-to-width ratio of 0.3)" and a "flat area (depth-to-width ratio of 0.0)", followed by optimizing etching conditions to thereby ensure a difference in the etching speed between the areas. Thus, this method can ensure etching of only the "area of a high depth-to-width ratio", only leaving the reflective layer in the "flat area".

However, the method recited in claim 2 of Patent Literature 2 also has a problem that: the conditions of etching only the "area of a high depth-to-width ratio" are quite limited; the reflective layer is thin in the "flat area" of the obtained counterfeit prevention structure; and the reflectance (or transmittance) is varied.

Still another problem is raised in the case where etching is performed after providing a metal reflective layer, by means of a vacuum vapor deposition method, to a structure having an "area of a high depth-to-width ratio (depth-to-width ratio of 0.3)" and an "area such as of a diffractive structure or a relief hologram structure (area with a depth-to-width ratio of 0.1 to 0.5)". In such a case, it is difficult to etch only the reflective layer covering the "area of a high depth-to-width ratio".

The cause of this problem lies in that there is not a large difference in the "depth-to-width ratio" between the two areas and thus it is difficult to ensure a difference in the etching speed between the areas. Theoretically, this problem is improved by providing a large difference in the depth-to-width ratio between the two areas. However, the "structure having a higher depth-to-width ratio" involves the necessity of providing a finer and more complicated structure which is difficult to be molded.

In other words, this problem is not essentially solved by using the parameters of the "depth-to-width ratio" alone defined in Patent Literature 2.

To cope with such an issue, in the invention disclosed by Patent Literature 3, an etching mask is set up by means of a gas phase method based such as on vacuum vapor deposition. According to this method, a vapor-deposited pattern with high definition, or a vapor-deposited film pattern with high reproducibility of not more than 10 µm can be obtained. However, this method raises some problems, for example, of increasing processing steps and manufacturing cost due to the necessity of performing multi-layer vapor deposition, and requiring strict control in the thickness of each vapor-deposited film due to the necessity for the vapor-deposited multi-layer film to have a precise thickness. Further, as an unignorable disadvantage, the method of Patent Literature 3 suffers from a problem of being unable to leave the reflective layer in high-aspect portions (portions having high depth-to-width ratio).

In addition, WO 2008/017362 A2 discloses a method for producing a multi-layer body, and multi-layer body. EP 2444826 A1 discloses a optical device and a method of manufacturing the same. WO 2011/057739 A1 discloses a production of a security element provided with colored micro-depressions. WO 2009/083151 A1 discloses a security element.

### [Citation List]

### [Patent Literatures]

Patent Literature 1: JP-A-2003-255115
Patent Literature 2: JP-A-2008-530600
Patent Literature 3: JP-A-2012-063738

### [Summary of the Invention]

### [Technical Problem]

An issue of the present invention is to provide a counterfeit prevention structure which enables formation of a reflective layer of a precise pattern with a high positional accuracy and which is quite unlikely to be counterfeited, and to provide a manufacturing method which is able to form the counterfeit prevention structure at low cost with high productivity.

### [Solution to Problem]

The invention aims at a counterfeit prevention structure according to claim 1. Embodiments of that structure are recited in its dependent claim. The invention aims also at a method for manufacturing such a counterfeit prevention structure according to claim 3. Embodiments of that structure are recited in dependent claims 4 to 6.

### [Advantageous Effects of the Invention]

The present invention can provide a counterfeit prevention structure that enables formation of a reflective layer of a precise pattern with a high positional accuracy and is quite unlikely to be counterfeited. Further, the present invention can provide a manufacturing method with which the counterfeit prevention structure can be formed at low cost with high productivity.

### [Brief Description of the Drawings]

The subject matter relating to a "counterfeit prevention structure comprising fine particles that are filled in recesses of a first relief structure, and a method of forming such a counterfeit prevention structure", hereafter referred to as "first embodiment", is disclosed with reference to Figs. 2 and 3 for illustrative purposes only and is not within the scope of the claimed invention. The subject matter relating to a "counterfeit prevention structure comprising a first and a second relief structure with a reflective layer arranged only on the second relief structure, and a method of forming such a counterfeit prevention structure", hereafter referred to as "third embodiment", is disclosed with reference to Figs. 6 and 7 for illustrative purposes only and is not within the scope of the claimed invention.

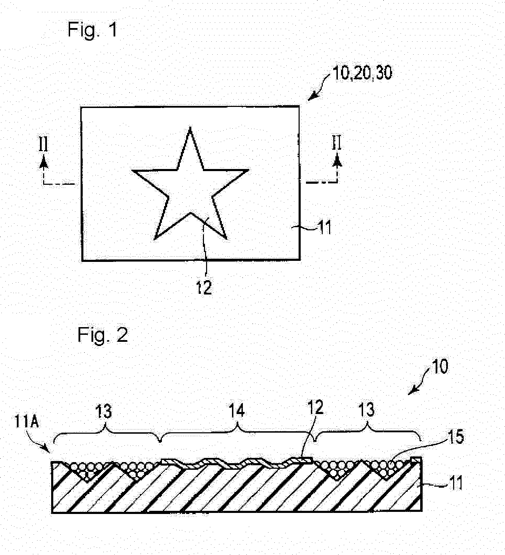

[Fig. 1] is a schematic plan view illustrating a counterfeit prevention structure of first to third embodiments;
[Fig. 2] is a cross-sectional view taken along a line II-II of the counterfeit prevention structure illustrated in Fig. 1 and related to the first embodiment that does not fall within the scope of the claims.

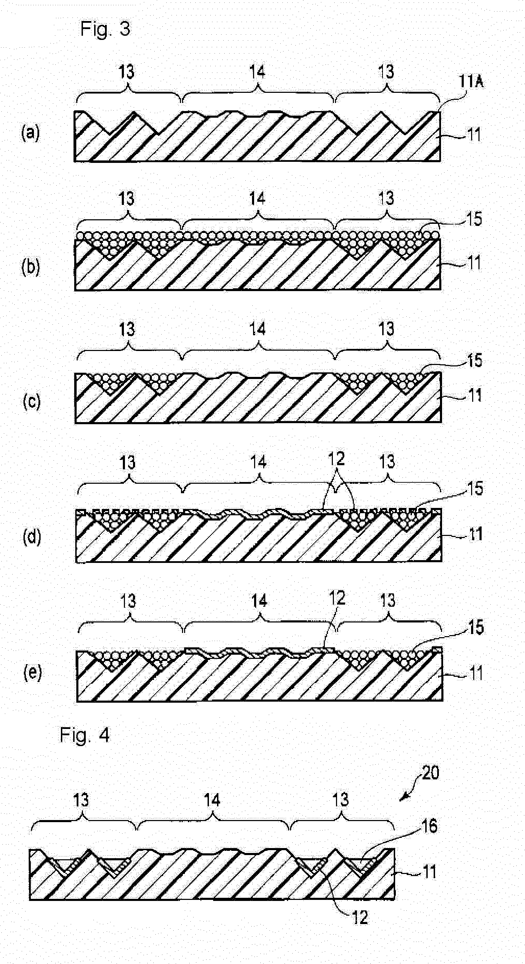

[Fig. 3] shows cross-sectional views illustrating a manufacturing method for the counterfeit prevention structure illustrated in Fig. 2;
[Fig. 4] is a cross-sectional view taken along the line II-II of the counterfeit prevention structure illustrated in Fig. 1 and related to the second embodiment that defines the invention;

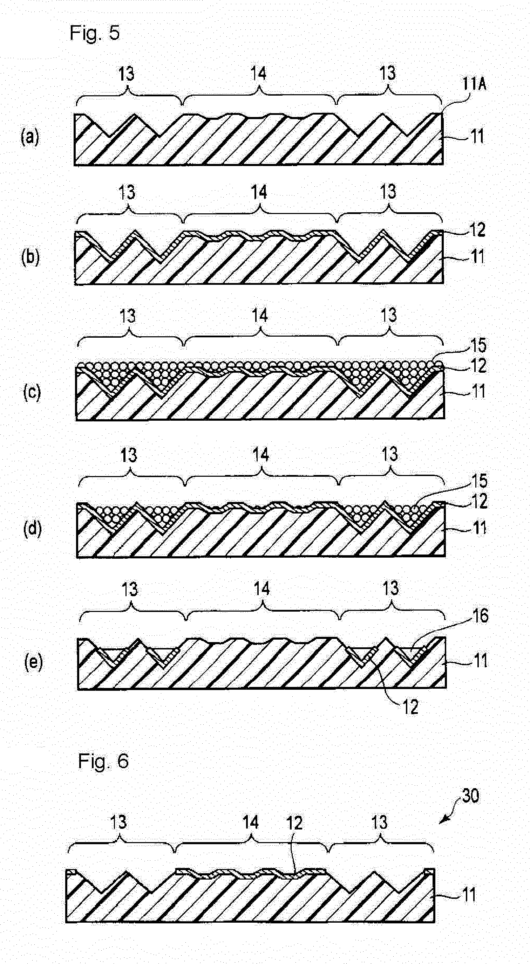

[Fig. 5] shows cross-sectional views illustrating a manufacturing method for the counterfeit prevention structure illustrated in Fig. 4;
[Fig. 6] is a cross-sectional view taken along the line II-II of the counterfeit prevention structure illustrated in Fig. 1 and related to the third embodiment that does not fall within the scope of the claims; and

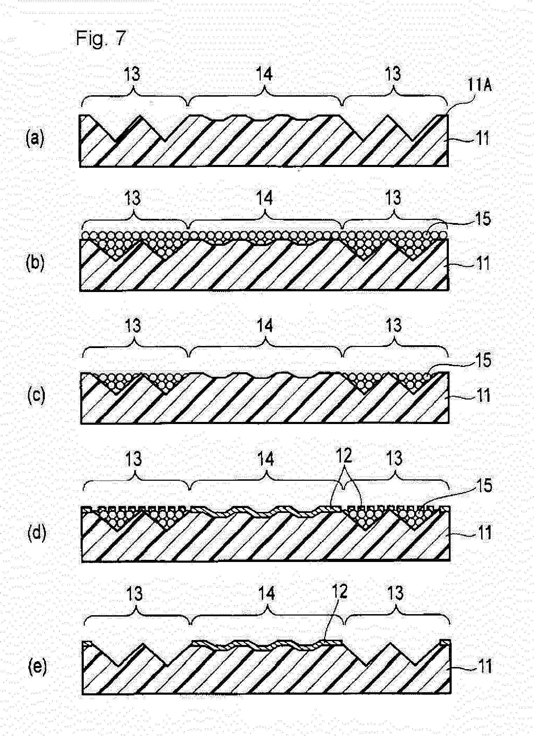

[Fig. 7] shows cross-sectional views illustrating a manufacturing method for the counterfeit prevention structure illustrated in Fig. 6;

### [Description of Embodiments]

With reference to the drawings, hereinafter are described in detail some embodiments of a counterfeit prevention structure and a manufacturing method therefor related to the present invention invention as defined in the claims, and also possible combinations of that invention as defined in the claims with possible embodiments. It should be noted that, in the description provided below, the same reference signs are designated to the components having the same function, and duplicate description is given only when necessary.

The following is a description regarding a counterfeit prevention structure and a manufacturing method therefor, according to a first embodiment of the present invention.

Fig. 1 is a schematic plan view illustrating the counterfeit prevention structure of the first embodiment. Fig. 2 is a cross-sectional view taken along a line II-II of a counterfeit prevention structure 10 illustrated in Fig. 1.

It should be noted that the plan view shown in Fig. 1 also applies to second and third embodiments discussed later.

As shown in Figs. 1 and 2, the counterfeit prevention structure 10 includes a fine-relief-formation layer 11, a reflective layer 12 and functional fine particles 15. The fine-relief-formation layer 11 has a principal surface 11A (hereinafter referred to as first principal surface 11A) that is provided with a first area 13 including a relief structure with a depth-to-width ratio of not less than 0.5, and a second area 14 including a relief structure with a depth-to-width ratio of less than 0.5. It should be noted that the "depth-to-width ratio" refers to a ratio of a depth to a width.

The relief structure in the first area 13 has recesses which are filled with the fine particles 15. The relief structure in the second area 14 is arranged thereon with the reflective layer 12. The reflective layer 12 is arranged so as to cover the first principal surface 11A of the fine-relief-formation layer 11 excepting the first area 13, i.e. cover the first principal surface 11A of the second area 14. The first area 13 has a light transmittance that is higher than that of the second area 14. Individual parts that configure the counterfeit prevention structure 10 are specifically described later.

The following a description on the manufacturing method for the counterfeit prevention structure of the first embodiment.

Fig. 3 shows cross-sectional views illustrating a manufacturing method for the counterfeit prevention structure 10.

First, as shown in Fig. 3 by (a), the first area 13 and the second area 14 are formed on the first principal surface 11A of the fine-relief-formation layer 11. Specifically, the first principal surface 11A is formed with the first area 13 including the relief structure with a depth-to-width ratio of not less than 0.5, and the second area 14 including the relief structure with a depth-to-width ratio of less than 0.5. Then, as shown in Fig. 3 by (b), the functional fine particles 15 are coated onto the structure shown in Fig. 3 by (a), i.e. onto the relief structures of the first and second areas 13 and 14.

After that, as shown in Fig. 3 by (c), the fine particles 15 in the second area 14 are removed by wiping by means of an air knife, a doctor, a squeegee, or the like, thereby filling the fine particles 15 only in the recesses of the relief structure in the first area 13. The relief structure of the first area 13 has a recess width and a depth-to-width ratio, with which the fine particles 15 can be filled in the recesses of the relief structure. On the other hand, the relief structure of the second area 14 has a recess width and a depth-to-width ratio, with which the fine particles 15 cannot be filled in the recesses of the relief structure. Specifically, the width of each recess and the depth-to-width ratio of the relief structure in the first area 13 are set to values that can allow the fine particles 15 to be filled in the recesses of the relief structure. On the other hand, the width of each recess and the depth-to-width ratio of the relief structure in the second area 14 are set to values that cannot allow the fine particles 15 to be filled in the recesses of the relief structure.

After that, the fine particles 15 are partially adhered (temporarily adhered) to the recesses of the relief structure in the first area 13 by heating or by coating a solvent.

Subsequently, as shown in Fig. 3 by (d), the reflective layer 12 is dry-coated onto the structure shown in Fig. 3 by (c), i.e. onto the first area 13 including the fine particles 15, and the second area 14. The fine particles 15, or an integrated body of the fine particles, in the first area 13 have a relief surface area which is larger than the surface area of the relief structure in the second area 14. Accordingly, the reflective layer 12 dry-coated onto the fine particles 15 has a thickness which is sufficiently smaller than that of the reflective layer 12 dry-coated onto the second are 14.

After that, as shown in Fig. 3 by (e), the reflective layer 12 is immersed in an etchant for corrosion and dissolution. As a result, etching is performed to corrode and dissolve the thin reflective layer 12 adhered onto the fine particles 15. Thus, the reflective layer 12 is left only in the second area 14.

Through the processes described above, the counterfeit prevention structure 10 of the first embodiment shown in Fig. 2 can be manufactured.

Hereinafter, the individual parts that configure the counterfeit prevention structure of the first embodiment are described in detail.

### (Fine-relief-formation layer)

The fine-relief-formation layer 11 has the first area 13 and the second area 14 in one principal surface 11A (first principal surface 11A).

The first area 13 is formed with a relief structure which is configured by a plurality of recesses and protrusions. For example, the first area 13 is formed, as the relief structure, with a plurality of unidirectionally and regularly arrayed grooves. In the structure, a ratio of the width of an opening of each groove relative to the depth of the groove, i.e. a depth-to-width ratio, is, for example, not less than 0.5.

The second area 14 is formed with a relief structure configured by a plurality of recesses and protrusions. For example, the second area 14 is formed, as the relief structure, with a plurality of unidirectionally and regularly arrayed grooves. The depth-to-width ratio of each groove is, for example, less than 0.5.

The depth-to-width ratio of the relief structure formed in the first area 13 is larger than the depth-to-width ratio of the relief structure formed in the second area 14. Further, the relief structures in the first and second areas 13 and 14 each form an optical element, such as a diffraction grating or a hologram.

As typical methods of mass replicating a resin molding (fine-relief-formation layer) having a continuous fine relief pattern (relief structure), mention can be made such as of the "pressing method" described in JP-A-2007-112988, the "casting method" described in JP-A-2007-115356, and the "photopolymer method" described in JP-A-H02-037543.

Among them, the photopolymer method (2P method, or photosensitive resin method) is performed by casting a radiation curable resin between a relief mold (fine relief pattern replication mold) and a flat base (e.g., plastic film) and curing the resin by applying radiation, followed by releasing the cured film from the replication mold together with the base. With this method, a fine relief pattern with high definition can be obtained.

The fine-relief-formation layer obtained using this method has good molding precision and excellent heat resistance and chemical resistance in the relief pattern, compared with the one obtained through the pressing method or the casting method, which uses a thermoplastic resin. Further, newer manufacturing methods include a method in which a molding is obtained using a photocurable resin which is solid or highly viscous at room temperature, and a method in which a mold release material is added.

The materials used for the fine-relief-formation layer 11 include, for example, thermoplastic resins and thermosetting resins. As examples of the thermoplastic resins, mention can be made of acrylic resins, epoxy resins, cellulosic resins, vinyl resins, and the like, used singly or in combination. Further, as examples of the thermosetting resins, mention can be made of urethane resins, melamine resins, epoxy resins, phenol resins, and the like, used singly or in combination. The urethane resins that can be used include, for example, a resin that is obtained by adding polyisocyanate, as a cross-linking agent, to acrylic polyol, polyester polyol, or the like having a reactive hydroxy group to achieve cross-linkage. Resins other than the ones mentioned above may be used as appropriate as far as the relief structures can be formed.

The materials of the fine-relief-formation layer 11 that can be used in the photopolymer method can include monomers, oligomers, polymers, and the like having an ethylenic unsaturated bond or an ethylenic unsaturated group. For example, the monomers that can be used include 1,6-hexanediol, neopentyl glycol diacrylate, trimethylolpropane triacrylate, pentaerythritol triacrylate, pentaerythritol tetraacrylate, dipentaerythritol pentaacrylate, dipentaerythritol hexaacrylate, and the like. The oligomers include epoxy acrylate, urethane acrylate, polyester acrylate, and the like. The polymers include, but not limited to, a urethane-modified acrylic resin, and an epoxy-modified acrylic resin.

When photo-cationic polymerization is used, the materials of the fine-relief-formation layer 11 that can be used include monomers, oligomers, polymers, oxetane skeleton-containing compounds, and vinyl ethers having an epoxy group. When the ionizing radiation curable resin mentioned above is cured using rays, such as ultraviolet rays, a photo polymerization initiator may be added. Depending on the resin, a photo-radical polymerization initiator, a photo-cationic polymerization initiator, or a combination of these initiators (hybrid type) may be selected.

Further, monomers, oligomers, polymers, and the like having an ethylenic unsaturated bond or an ethylenic unsaturated group may be mixed and used. Further, these materials may each be provided with a reaction group in advance and cross-linked to each other using an isocyanate compound, silane coupling agent, organic titanate cross-linking agent, organic zirconium cross-linking agent, organic aluminate, or the like. In addition, the monomers, oligomers, polymers, and the like may each be provided with a reaction group in advance and cross-linked to another resin skeleton using an isocyanate compound, silane coupling agent, organic titanate cross-linking agent, organic zirconium cross-linking agent, organic aluminate, or the like. Using such a method, a polymer having an ethylenic unsaturated bond or an ethylenic unsaturated group can be obtained. Such a polymer, which is solid at room temperature and has little tackiness, exerts good moldability and hardly stains the original plate.

The photo-radical polymerization initiator can include, for example: a benzoin-based compound, such as benzoin, benzoin methyl ether, or benzoin ethyl ether; an anthraquinone-based compound, such as anthraquinone, or methyl anthraquinone; a phenyl ketone-based compound, such as acetophenone, diethoxyacetophenone, benzophenone, hydroxyacetophenone, 1-hydroxycyclohexyl phenyl ketone, α-aminoacetophenone, or 2-methyl-1-(4-methylthiophenyl)-2-morpholinopropane-1-one; benzyl dimethyl ketal; thioxanthone; acyl phosphine oxide; or Michler's ketone.

When a photo-cationically polymerizable compound is used, the photo-cationic polymerization initiator that can be used includes aromatic diazonium salt, aromatic iodonium salt, aromatic sulfonium salt, mixed ligand metallic salt, or the like. In the case of using a so-called hybrid-type material that combines the photo-radical polymerization with photo-cationic polymerization, a mixture of the respective polymerization initiators may be used. Further, one kind of initiator having a function of initiating both of the polymerizations may be used, which includes aromatic iodonium salt, aromatic sulfonium salt, or the like.

A radiation curable resin and a photo polymerization initiator may be appropriately formulated depending on the materials, but generally, they are formulated by 0.1 to 15 mass%. For the resin composition, a sensitizing dye may be used in combination with a photo polymerization initiator. Further, as necessary, the composition may contain a dye, pigment, various additives (e.g., polymerization inhibitor, leveling agent, anti-foam agent, drip inhibitor, adhesion improver, coating surface improver, plasticizer, nitrogen-containing compound, etc.), cross-linking agent (e.g., epoxy resin, etc.), or the like. In order to improve moldability, a non-reactive resin (including the thermoplastic resins or the thermosetting resins mentioned above) may be added.

The materials may be selected taking account that the materials have flowability of some extent that enables molding in the applied manufacturing method, and the coated film after molding is imparted with a desired heat resistance or chemical resistance.

A coating method may be used in providing the fine-relief-formation layer 11 on a support base. In this case, the material of the fine-relief-formation layer 11 may be coated onto the support base. A wet coating in particular can realize coating at low cost. In order to adjust the thickness of the coated film, a material which is diluted with a solvent may be coated and dried.

Preferably, the support base may be a film base. For example, a plastic film such as of PET (polyethylene terephthalate), PEN (polyethylene naphthalate) or PP (polypropylene) may be used. Desirably, the material used is hardly applied with heat or pressure in molding the fine-relief pattern (relief structure), and is hardly deformed or altered by electromagnetic waves. It should be noted that, as necessary, paper, synthetic paper, plastic multi-layer paper, resin-impregnated paper, or the like may be used as the support base.

The fine-relief-formation layer 11 can be appropriately provided with a thickness ranging from 0.1 to 10 µm. Depending on the manufacturing method, an excessively large thickness causes squeeze-out or wrinkle of the resin in a pressing process, and an excessively small thickness disables sufficient molding due to the poor flowability. The moldability depends on the desired shape of the fine relief pattern, but, preferably, the fine-relief-formation layer 11 to be provided has a thickness that is 1 to 10 times, more preferably, 3 to 5 times, of the depth of the desired relief structure.

The obtained fine-relief-formation layer 11 is brought into contact with a relief plate, on which a desired relief configuration of the optical element is formed. After that, if necessary, the configuration of the relief plate is transferred to one principal surface of the fine-relief-formation layer 11, using heat, pressure and electromagnetic waves. It should be noted that, the relief configuration may be formed on the front and back sides, i.e. one principal surface and the opposed other principal surface, of the fine-relief-formation layer 11. A known method may be used as a method of fabricating the relief plate. As far as a roll plate is used, continuous molding can be performed.

### (First area)

The first area 13 having an important function of the present invention is provided on the first principal surface 11A of the fine-relief-formation layer 11. A relief structure composed of a plurality of recesses and protrusions is formed in the first area 13. The plurality of recesses and protrusions may be arrayed in a one- or two-dimensional manner, or may be arrayed in a regular or irregular manner. For example, in the first area 13 of the embodiment, a plurality of grooves are formed as the relief structure, being regularly arrayed in one direction.

A cross section perpendicular to the longitudinal direction of each of the plurality of grooves is, for example, in a V or U shape. In the embodiment, the cross section is in a V shape. The ratio of the width in the opening portion of each groove to the depth thereof, i.e. the depth-to-width ratio, is, for example, not less than 0.5.

A relief structure having a depth-to-width ratio of not less than 0.5 formed in the first area 13 forms the optical element. As examples of the optical element, mention can be made of, but not limited to, a reflective structure, relief hologram, diffraction grating, subwavelength grating, microlens, deflection element, scattering element, light-condensing element, and diffusion element. The optical element may be appropriately selected according to the required optical effects. Further, the first area 13 may be formed by combining a plurality of optical elements or combining at least one optical element with a smooth-plane portion.

The relief structure formed in the first area 13 is associated with the filling of the functional fine particles 15 in a post process. In particular, when spherical resin particles, which are fine particles exhibiting sharp particle size distribution, are used as the fine particles 15 to be filled in the recesses of the relief structure, the depth-to-width ratio of not less than 0.5 can allow the fine particles 15 to be filled in the recesses of the relief structure.

In the subsequent process of wiping, using an air knife, a doctor, a squeegee, or the like, the unnecessary fine particles 15 remaining in the first principal surface 11A of the second area 14 are required to be removed, while the fine particles 15 are required to be left in the recesses of the relief structure in the first area 13. In this case, it is preferable that the depth-to-width ratio of the relief structure is high. However, a structure with a high depth-to-width ratio may make it difficult to stably form a relief structure.

For example, when the depth-to-width ratio is not less than 2, the productivity in molding the fine relief pattern is low. Especially, as the depth-to-width ratio becomes higher in the structure, or as each protrusion has a shape of being less reduced in volume from the base toward the tip thereof, molding becomes more difficult. Further, in this case, the adhesiveness of the fine-relief-formation layer 11 to the relief plate is raised, allowing adhesion therebetween and impairing the yield rate.

As far as the recesses of the relief structure in the first area 13 have a function of filling therein the fine particles 15, the structure is not necessarily required to be a precise periodic structure. Desirably, the depth-to-width ratio of the relief structure is 0.5 or more but less than 2.0, or the ratio may be partially different.

### (Second area)

The second rea 14 is provided on the first principal surface 11A of the fine-relief-formation layer 11. A relief structure composed of a plurality of recesses and protrusions is formed in the second area 14. The plurality of recesses and protrusions may be arrayed in a one- or two-dimensional manner, or may be arrayed in a regular or irregular manner. For example, in the second are 14 of the embodiment, a plurality of grooves are formed as the relief structure, being regularly arrayed in one direction.

A cross section perpendicular to the longitudinal direction of each of the plurality of grooves is, for example, in a V or U shape. In the embodiment, the cross section is in a V shape. The ratio of the width in the opening portion of each groove to the depth thereof, i.e. the depth-to-width ratio, is, for example, less than 0.5.

A relief structure having a depth-to-width ratio of less than 0.5 formed in the second area 14 forms the optical element. As examples of the optical element, mention can be made of, but not limited to, a reflective structure of a smooth plane, relief hologram, diffraction grating, subwavelength grading, microlens, deflection element, scattering element, light-condensing element, and diffusion element. The optical element may be appropriately selected according to the required optical effects. Further, the second area 14 may be formed by combining a plurality of optical elements or combining at least one optical element with a smooth-plane portion.

### (Reflective layer)

The reflective layer 12 covers the second area 14 in the first principal surface 11A of the fine-relief-formation layer 11 and has characteristics of reflecting electromagnetic waves. In a second embodiment discussed later, the reflective layer 12 covers the first area 13.

In the case of reflecting the light that has transmitted through the fine-relief-formation layer 11, a high-refractive index material having a refractive index higher than that of the fine-relief-formation layer 11 may be used as the reflective layer 12. In this case, it is preferable that the difference in refractive index between the fine-relief-formation layer 11 and the reflective layer 12 is not less than 0.2. The difference in refractive index of not less than 0.2 allows the occurrence of refraction and reflection of light at an interface between the fine-relief-formation layer 11 and the reflective layer 12. It should be noted that the reflective layer 12 covered with an optical element having a relief structure can emphasize the optical effects exerted by the relief structure.

Materials of the reflective layer 12 can include metal materials such as of Al, Sn, Cr, Ni, Cu, Au or Ag used singly, or a compound of these metals.

Examples of materials that can be used as the transparent reflective layer 12 are as follows. The bracketed numerals following respective chemical formulas or compound names each indicate a refractive index n. As ceramics, mention can be made of Sb₂O₃ (3.0), Fe₂O₃ (2.7), TiO₂ (2.6), CdS (2.6), CeO₂ (2.3), ZnS (2.3), PbCI2 (2.3), CdO (2.2), Sb₂O₃ (5), WO₃ (5), SiO (5), Si₂O₃ (2.5), In₂O₃ (2.0), PbO (2.6), Ta₂O₃ (2.4), ZnO (2.1), ZrO₂ (5), MgO (1), SiO₂ (1.45), Si₂O₂ (10), MgF₂ (4), CeF₃ (1), CaF₂ (1.3 to 1.4), AlF₃ (1), Al₂O₃ (1), GaO (2), and the like. As organic polymers, mention can be made of, but not limited to, polyethylene (1.51), polypropylene (1.49), polytetrafluoroethylene (1.35), polymethylmethacrylate (1.49), polystyrene (1.60), and the like.

A material may be selected from these materials, which material causes change in reflective index or transparency by dissolution, corrosion or alteration. In some cases, a plurality of materials may be used.

As the method of causing change in the refractive index or transmittance by dissolution, a known method of etching treatment for a metal, a metal oxide and the like may be used. Treating agents that can be used for etching may include known acids, alkalies, organic solvents, oxidizing agents, reducing agents, and the like.

As the method of causing change in the refractive index or transmittance by alteration, mention can be made of, but not limited to, oxidizing copper using an oxidizing agent, for change into cuprous oxide, and oxidizing aluminum using an oxidizing agent, for change into boehmite.

The material used for the reflective layer 12 is appropriately selected based on not only dissolution characteristics or alteration characteristics, but also optical characteristics, such as refractive index, reflectance and transmittance, or practical durabilities, such as weather resistance and interlayer adhesiveness, to thereby provide the reflective layer 12 in the form of a film.

The reflective layer 12 is required to be formed into a film with a uniform surface density relative to the first principal surface 11A of the fine-relief-formation layer 11. Therefore, dry coating is preferably used. For example, a known method, such as vacuum vapor deposition, sputtering, or CVD, can be used as appropriate.

The transmittance of the transparent reflective layer 12 in a wavelength range of 400 nm to 700 nm is not less than 50%. This is because this range of transmittance enables checking of the information arranged under the reflective layer 12, the information being, for example, printed information, such as a headshot, letters, or patterns.

It should be noted that the counterfeit prevention structure of the present invention may only have to enable visual inspection at least from either a reflective layer 12 side or a fine-relief-formation layer 11 side.

Further, in a portion where the transparent reflective layer 12 is provided, visually inspectable information can be provided under the reflective layer 12, and thus the required information can be stacked with the counterfeit prevention structure. Using these techniques, the reflective layer 12 can be applied such as to a counterfeit prevention oversheet which is usable such as for an ID card or a passport.

### (Functional fine particles)

The functional fine particles 15 are required to be filled in the recesses of the relief structure in the first area 13, but not to be filled in on the second area 14, and to be removable in the wiping process (air knife, doctor, and squeegee) performed later.

Preferably, the functional fine particles 15 are monodisperse spherical fine particles of an organic material system or an inorganic material system. The monodisperse spherical fine particles of the organic system materials can include, but not limited to: resins, such as acryl, polystyrene, polyester, polyimide, polyolefin, polymethyl (metha)acrylate, polyethylene, polypropylene, polyethylene, polyethersulfone, polyamide, nylon, polyurethane, polyvinyl chloride, polyvinylidene chloride, and acrylamide; and copolymer resins comprised of two or more of these resins.

Similarly, the monodisperse spherical fine particles of the inorganic system materials include, but not limited to, calcium carbonate, barium carbonate, magnesium carbonate, calcium silicate, barium silicate, magnesium silicate, calcium phosphate, barium phosphate, magnesium phosphate, silica, titanium oxide, iron oxide, cobalt oxide, zinc oxide, nickel oxide, manganese oxide, aluminum oxide, iron hydroxide, nickel hydroxide, aluminum hydroxide, calcium hydroxide, chromium hydroxide, zinc silicate, aluminum silicate, zinc carbonate, basic copper carbonate, zinc sulfide, glass, and various metallic particles.

The functional fine particles 15 also include surface-modified type fine particles, core-shell type particles, laminated spherical type particles, and beaded spherical particles, which use two or more of the organic system materials and the inorganic system materials mentioned above. For example, the functional fine particles 15 may each have a core-shell structure in which the shell is comprised of a polymer that is softened at a predetermined temperature. Further, as the functional fine particles 15, mention can also be made of, but not limited to, empty spherical particles, spherical aggregate of fine particles, porous spherical particles, and thermally expandable spherical particles, which use the organic system materials and the inorganic system materials mentioned above.

In the counterfeit prevention structure and the manufacturing method therefor of the present invention, a binder resin may be added, as a resin for fixing fine-particle, to a coating solution that contains the functional fine particles 15, which is used for providing a coating of the functional fine particles 15. The resin for fixing fine particles, as far as it fixes the functional fine particles 15, may be appropriately selected from the resins that have good adhesiveness to the fine particles 15 and are able to achieve fixation. Such resins for fixing fine particles include, for example, known coating (printing) resins, viscous resins, hot tack resins, thermoplastic resins, thermosetting resins, ultraviolet curable resins, and ionizing radiation curable resins. Further, the solvent used for coating may be of a water base or a solvent base, as far as the solvent is suitable for the resin for fixing fine particles and the fine particles 15.

Further, the resin for fixing fine particles may be a cross-linking agent, or a resin obtained by adding a cross-linking agent to a resin mentioned above. The cross-linking agents can include isocyanate group-containing compounds, epoxy group-containing compounds, carbodiimide group-containing compounds, oxazoline group-containing compounds, and silanol group-containing compounds. Using any of these cross-linking agents, cross linkage may be achieved within the f resin for fixing fine particles, or between the functional fine particles 15, or between the resin for fixing fine particles and the functional fine particles 15. Further, for the cross-linkage, a reactive group may be added, which is required for cross-linking the resin for fixing fine particles with the functional fine particles 15, or a catalyst may be added to enhance the crosslink density. Furthermore, the resin for fixing fine particles may be a self-cross-linking resin that has a functional group in a polymer, the functional group being required for the cross-linkage.

The functional fine particles 15 can be coated using a known printing method, such as a gravure printing method, gravi printing method, reverse gravure printing method, roll coating method, bar coating method, flexographic printing method, screen printing method, spin coating method, spray coating method, inkjet printing method, or the like.

In the first embodiment, the fine particles 15 are filled in and adhered to only the recesses of the relief structure in the first area 13. Further, the reflective layer 12 is coated onto the fine particles 15 of the first area 13 and onto the relief structure of the second area 14. Then, the reflective layer 12 in the first and second areas 13 and 14 is uniformly melted by etching. The thickness of the reflective layer 12 on the fine particles 15 is sufficiently smaller than the thickness of the reflective layer 12 in the second area 14. Accordingly, the reflective layer 12 on the fine particles 15 is etched first to thereby leave the reflective layer 12 only in the second area 14.

In this way, a reflective layer of a precise pattern can be formed with a high positional accuracy with respect to the second area 14 of the fine-relief-formation layer 11, thereby providing a counterfeit prevention structure which is quite unlikely to be counterfeited. Further, the counterfeit prevention structure can be formed at low cost with high productivity.

As described above, according to the first embodiment, a reflective layer of a precise pattern can be formed with a high positional accuracy with respect to a counterfeit structure having an optical element that includes relief structures, thereby providing a counterfeit prevention structure which is quite unlikely to be counterfeited. Further, the counterfeit prevention structure can be formed at low cost with high productivity.

Specifically, in a counterfeit prevention structure that includes areas such as of a mirror reflection structure, scattering structure, diffraction structure, interference structure, relief hologram, and lens array structure, a reflective layer with a pattern can be stably formed at any position with a high positional accuracy, when the counterfeit prevention structure is a high-aspect structure or a low-aspect structure, thereby realizing a counterfeit prevention structure which is very unlikely to be counterfeited. Further, such a counterfeit prevention structure can be formed at low cost with high productivity.

### [Second Embodiment]

The following is a description on a counterfeit prevention structure and a manufacturing method therefor, according to a second embodiment of the present invention. Since the plan view of the counterfeit prevention structure of the second embodiment is similar to the one shown in Fig. 1, the illustration is omitted.

Fig. 4 is a cross-sectional view of the counterfeit prevention structure of the second embodiment, taken along the line II-II in the illustration of the counterfeit prevention structure shown in Fig. 1.

As shown in Fig. 4, a counterfeit prevention structure 20 includes a fine-relief-formation layer 11, a reflective layer 12, and an etching mask coating (filmed functional fine particles) 16. The fine-relief-formation layer 11 has a first principal surface 11A which is provided with a first area 13 that includes a relief structure having a depth-to-width ratio of not less than 0.5, and a second area 14 that includes a relief structure having a depth-to-width ratio of less than 0.5.

The relief structure of the first area 13 has recesses in which the reflective layer 12 is arranged. The etching mask coating 16 is arranged on the reflective layer 12 which is arranged in the recesses of the first area 13. The second area 14 has a light transmittance that is higher than that of the first area 13.

Subsequently, the manufacturing method for the counterfeit prevention structure of the second embodiment is described.

Fig. 5 shows cross-sectional views illustrating a manufacturing method for the counterfeit prevention structure 20.

First, as shown in Fig. 5 by (a), the first area 13 and the second area 14 are formed on the first principal surface 11A of the fine-relief-formation layer 11. Specifically, the first principal surface 11A is formed with the first area 13 that includes the relief structure having a depth-to-width ratio of not less than 0.5, and the second area 14 that includes the relief structure having a depth-to-width ratio of less than 0.5. Then, as shown in Fig. 5 by (b), the reflective layer 12 is dry-coated onto the structure shown in Fig. 5 by (a), i.e. onto the relief structures of the first and second areas 13 and 14.

After that, as shown in Fig. 5 by (c), the functional fine particles 15 are coated onto the structure shown in Fig. 5 by (b), i.e. onto the reflective layer 12 of the first and second areas 13 and 14. Then, wiping is conducted using an air knife, a doctor, a squeegee, or the like to remove, as shown in Fig. 5 by (d), the fine particles 15 that are present on the second area 14 to fill the fine particles 15 only in the recesses of the relief structure in the first area 13. The relief structure of the first area 13 has a recess width and a depth-to-width ratio, with which the fine particles 15 can be filled in the recesses of the relief structure. On the other hand, the relief structure of the second area 14 has a recess width and a depth-to-width ratio, with which the fine particles 15 cannot be filled in the recesses of the relief structure.

Then, as shown in Fig. 5 by (e), the fine particles 15 in the recesses of the first area 13 are melted or dissolved and turned into a film to thereby form the etching mask coating 16. After that, the reflective layer 12 is immersed in an etchant, for corrosion and dissolution. Thus, the reflective layer 12 that is present in the second area 14 is corroded and dissolved by the etching, leaving only the reflective layer 12 which is covered and protected by the etching mask coating 16 of the first area 13.

The counterfeit prevention structure 20 of the second embodiment shown in Fig. 4 can be manufactured through the processes described above.

The fine-relief-formation layer 11, first area 13, second are 14, reflective layer 12 and functional fine particles 15 related to the counterfeit prevention structure 20 of the second embodiment are as described in the first embodiment. The description here is given in detail on the etching mask coating 16.

### (Etching mask coating)

The etching mask coating 16 has characteristics of not dissolving into at least one liquid material that dissolves the reflective layer 12, and of being slow in the speed of dissolution into the liquid material. Similar to the reflective layer 12, the mask coating 16 is provided in the form of a thin film, with a surface density that is uniform relative to the plane of the fine-relief-formation layer 11. The etching mask coating 16 of the present invention is formed by thermal deformation or swelling and dissolving deformation of the fine particles 15, and is required to have adhesiveness with respect to the reflective layer 12 and a shielding performance (masking performance) with respect to the etchant (corrosive agent, oxidizer).

In the second embodiment, the reflective layer 12 is coated onto the relief structures of the first and second areas 13 and 14, and then the fine particles 15 are filled only in the recesses of the first area 13. After that, the fine particles 15 are melted or dissolved to form the mask coating 16 on the reflective layer 12 of the first area 13, for the protection of the reflective layer 12. Then, the reflective layer 12 is dissolved by etching. The reflective layer 12 of the first area 13, which is protected by the mask coating 16, is not etched, leaving the reflective layer 12 only in the first area 13.

Thus, a reflective layer of a precise pattern can be formed with high accuracy in the first area 13 of the fine-relief-formation layer 11 to thereby provide a counterfeit prevention structure which is quite unlikely to be counterfeited. Further, the counterfeit prevention structure can be formed at low cost with high productivity.

### [Third Embodiment]

The following is a description on a counterfeit prevention structure and a manufacturing method therefor, according to a third embodiment of the present invention. Since the plan view of the counterfeit prevention structure of the third embodiment is similar to the one shown in Fig. 1, the illustration is omitted.

Fig. 6 is a cross-sectional view of the counterfeit prevention structure of the third embodiment, taken along the line II-II in the illustration of the counterfeit prevention structure shown in Fig. 1.

As shown in Fig. 6, a counterfeit prevention structure 30 includes a fine-relief-formation layer 11, and a reflective layer 12. The fine-relief-formation layer 11 has a first principal surface 11A which is provided with a first are 13 that includes a relief structure having a depth-to-width ratio of not less than 0.5, and a second area 14 that includes a relief structure having a depth-to-width ratio of less than 0.5.

The reflective layer 12 is arranged on the relief structure of the second area 14. The reflective layer 12 is formed so as to cover an area other than the first area 13, or, for example, so as to cover the second area 14. The first area 13 has a light transmittance that is higher than that of the second area 14.

Subsequently, the manufacturing method for the counterfeit prevention structure of the third embodiment is described.

Fig. 7 shows cross-sectional views illustrating a manufacturing method for the counterfeit prevention structure 30.

First, as shown in Fig. 7 by (a), the first area 13 and the second area 14 are formed on the first principal surface 11A of the fine-relief-formation layer 11. Specifically, the first principal surface 11A is formed with the first area 13 that includes the relief structure having a depth-to-width ratio of not less than 0.5, and the second area 14 that includes the relief structure having a depth-to-width ratio of less than 0.5. Then, as shown in Fig. 7 by (b), the functional fine particles 15 are coated onto the structure shown in Fig. 7 by (a), i.e. onto the relief structures of the first and second areas 13 and 14.

Then, wiping is conducted using an air knife, a doctor, a squeegee, or the like to remove, as shown in Fig. 7 by (c), the fine particles 15 that are present in the second area 14 to fill the fine particles 15 only in the recesses of the relief structure in the first area 13. The relief structure of the first area 13 has a recess width and a depth-to-width ratio, with which the fine particles 15 can be filled in the recesses of the relief structure. On the other hand, the relief structure of the second area 14 has a recess width and a depth-to-width ratio, with which the fine particles 15 cannot be filled in the recesses of the relief structure.

After that, the resultant is heated or a solvent is coated onto the resultant to permit the fine particles 15 to partially adhere (temporarily adhere) to the recesses in the relief structure of the first area 13.

Then, as shown in Fig. 7 by (d), the reflective layer 12 is dry-coated onto the structure shown in Fig. 7 by (c), i.e. onto the first and second areas 13 and 14, including the fine particles 15. Subsequently, as shown in Fig. 7 by (e), the fine particles 15 and the reflective layer 12 that are present in the first area 13 are removed by dissolving the fine particles 15 with a solvent, or performing ultrasonic irradiation, blowing, or making a physical impact such as by spraying a solvent.

Through the processes as described above, the counterfeit prevention structure 30 of the third embodiment shown in Fig. 6 can be manufactured.

The fine-relief-formation layer 11, first area 13, second rea 14, reflective layer 12 and functional fine particles 15 related to the counterfeit prevention structure 30 of the third embodiment are similar to those of the first embodiment.

The fine particles 15 are filled only in the recesses of the relief structure in the first area 13, and further, the reflective layer 12 is coated onto the fine particles 15 in the first are 13 and the relief structure in the second area 14. After that, the fine particles 15 in the recesses of the first area 13 are removed together with the reflective layer 12 by dissolution or by performing a physical treatment, to thereby leave the reflective layer 12 only in the second area 14.

In this way, a reflective layer of a precise pattern can be formed with high positional accuracy in the second area 14 of the fine-relief-formation layer 11, thereby providing a counterfeit prevention structure which is quite unlikely to be counterfeited. Further, the counterfeit prevention structure can be formed at low cost and with high productivity.

The materials of the counterfeit prevention structure and the manufacturing method as examples are specifically described below.

### [Example 1]

In order to manufacture the counterfeit prevention structure related to the present invention, an ink composition for the fine-relief-formation layer 11 was prepared as shown below.

### "Ink composition for the fine-relief-formation layer" (Ultraviolet curable resin)

| | |
|---|---|
| Urethane (meth)acrylate (multi-functional, molecular weight of 6,000): | 50.0 parts by weight |
| Methyl ethyl ketone: | 30.0 parts by weight |
| Ethyl acetate: | 20.0 parts by weight |
| Photoinitiator (Irgacure 184, manufactured by Chiba Specialty Chemicals Inc.): | 1.5 parts by weight |

A roll photopolymer method was used as a method of forming the relief structures of the first and second areas 13 and 14 in the fine-relief-formation layer 11.

The "ink composition for the fine-relief-formation layer" was coated with a dry thickness of 2 µm by means of a gravure printing method, onto a support which was made of a transparent polyethylene terephthalate (PET) film having a thickness of 23 µm.

After that, a molding process was performed by pressing a cylindrical original plate having the relief structures of the first and second areas against the coated surface with a pressing force of 2 Kgf/cm², at a pressing temperature of 80°C, and at a pressing speed of 10 m/min.

Concurrently with the molding, ultraviolet exposure of 300 mJ/cm² was performed via the PET film by means of a high-pressure mercury lamp to cure the fine-relief-formation layer 11 concurrently with the transfer of the relief shapes of the original plate to the layer. The first area 13 of the molded fine-relief-formation layer had a rectangular structure having a depth-to-width ratio of 0.5 (500 nm/1000 nm), while the second area 14 thereof had a corrugated-sheet structure having a depth-to-width ratio of 0.1 (100 nm/1000 nm).

After that, the following "coating-solution composition for the functional fine particles" was prepared and coated onto the entire principal surface 11A (first principal surface 11A) of the fine-relief-formation layer 11 with a wet coating amount of 5 g/m².

### "Coating-solution composition for the functional fine particles" (Ultraviolet curable resin)

| | |
|---|---|
| 3500B (Spherical styrene of a particle size 500 nm, manufactured by Moriteq Co., Ltd.): | 15 parts by weight |
| BPW6110 (Acrylic adhesive, manufactured by Toyo Ink Co., Ltd.): | 5 parts by weight |
| Water: | 80 parts by weight |

After that, but prior to drying, the fine particles 15 on the coated surface was wiped off by means of a doctor blade made of stainless steel to fill the fine particles 15 into the recesses of the first area 13, followed by drying at 120°C for 30 seconds by means of an oven.

Further, aluminum was vacuum-deposited onto the entire first principal surface 11A of the fine-relief-formation layer 11, including the functional fine particles 15, such that the thickness in the smooth-plane portion was 40 nm, thereby providing the reflective layer 12. After that, etching was performed with sodium hydrate of 1.2 wt% to obtain the counterfeit prevention structure 10. In the obtained counterfeit prevention structure 10, the reflective layer 12 was arranged so as to cover only the second area 14.

### [Example 2]

In order to manufacture the counterfeit prevention structure related to the present invention, an ink composition for the fine-relief-formation layer 11 was prepared as shown below.

### "Ink composition for the fine-relief-formation layer" (Ultraviolet curable resin)

| | |
|---|---|
| Urethane (meth)acrylate (multi-functional, molecular weight of 6,000): | 50.0 parts by weight |
| Methyl ethyl ketone: | 30.0 parts by weight |
| Ethyl acetate: | 20.0 parts by weight |
| Photoinitiator (Irgacure 184, manufactured by Chiba Specialty Chemicals Inc.): | 1.5 parts by weight |

A roll photopolymer method was used as a method of forming the relief structures of the first and second areas 13 and 14 in the fine-relief-formation layer 11.

The "ink composition for the fine-relief-formation layer" was coated with a dry thickness of 2 µm by means of a gravure printing method, onto a support which was made of a transparent polyethylene terephthalate (PET) film having a thickness of 23 µm.

After that, a molding process was performed by pressing a cylindrical original plate having the relief structures of the first and second areas against the coated surface with a pressing force of 2 Kgf/cm², at a pressing temperature of 80°C, and at a pressing speed of 10 m/min.

Concurrently with the molding, ultraviolet exposure of 300 mJ/cm² was performed via the PET film by means of a high-pressure mercury lamp to cure the fine-relief-formation layer 11 concurrently with the transfer of the relief shapes of the original plate to the layer. The first area 13 of the molded fine-relief-formation layer had a rectangular structure having a depth-to-width ratio of 0.5 (500 nm/1000 nm), while the second area 14 thereof had a corrugated-sheet structure having a depth-to-width ratio of 0.1 (100 nm/1000 nm).

After that, aluminum was vapor-deposited onto the entire first principal surface 11A of the fine-relief-formation layer 11 such that the thickness in the smooth-plane portion was 40 nm, thereby providing the reflective layer 12. Further, the following "coating-solution composition for the functional fine particles" was prepared and coated onto the entire first principal surface 11A of the fine-relief-formation layer 11 with a wet coating amount of 5 g/m².

### "Coating-solution composition for the functional fine particles" (Ultraviolet curable resin)

| | |
|---|---|
| 3500B (Spherical styrene of a particle size 500 nm, manufactured by Moriteq Co., Ltd.): | 15 parts by weight |
| BPW6110 (Acrylic adhesive, manufactured by Toyo Ink Co., Ltd.): | 5 parts by weight |
| Water: | 80 parts by weight |

After that, but prior to drying, the fine particles 15 on the coated surface was wiped off by means of a doctor blade made of stainless steel to fill the fine particles 15 into the recesses of the first area 13, followed by drying at 120°C for 30 seconds by means of an oven.

Further, etching was applied to the entire first principal surface 11A of the fine-relief-formation layer 11 with sodium hydrate of 1.2 wt% to obtain the counterfeit prevention structure 20. In the obtained counterfeit prevention structure 20, the reflective layer 12 was arranged covering only the second area 14.

### [Example 3]

In order to manufacture the counterfeit prevention structure related to the present invention, an ink composition for the fine-relief-formation layer 11 was prepared as shown below.

### "Ink composition for the fine-relief-formation layer" (Ultraviolet curable resin)

| | |
|---|---|
| Urethane (meth)acrylate (multi-functional, molecular weight of 6,000): | 50.0 parts by weight |
| Methyl ethyl ketone: | 30.0 parts by weight |
| Ethyl acetate: | 20.0 parts by weight |
| Photoinitiator (Irgacure 184, manufactured by Chiba Specialty Chemicals Inc.): | 1.5 parts by weight |

A roll photopolymer method was used as a method of forming the relief structures of the first and second areas 13 and 14 in the fine-relief-formation layer 11.

The "ink composition for the fine-relief-formation layer" was coated with a dry thickness of 2 µm by means of a gravure printing method, onto a support which was made of a transparent polyethylene terephthalate (PET) film having a thickness of 23 µm.

After that, a molding process was performed by pressing a cylindrical original plate having the relief structures of the first and second areas against the coated surface with a pressing force of 2 Kgf/cm², at a pressing temperature of 80°C, and at a pressing speed of 10 m/min.

Concurrently with the molding, ultraviolet exposure of 300 mJ/cm² was performed via the PET film by means of a high-pressure mercury lamp to cure the fine-relief-formation layer 11 concurrently with the transfer of the relief shapes of the original plate to the layer. The first area 13 of the molded fine-relief-formation layer had a rectangular structure having a depth-to-width ratio of 0.5 (500 nm/1000 nm), while the second area 14 thereof had a corrugated-sheet structure having a depth-to-width ratio of 0.1 (100 nm/1000 nm).

After that, the following "coating-solution composition for the functional fine particles" was prepared and coated onto the entire first principal surface 11A of the fine-relief-formation layer 11 with a wet coating amount of 5 g/m².

### "Coating-solution composition for the functional fine particles" (Ultraviolet curable resin)

| | |
|---|---|
| 3500B (Spherical styrene of a particle size 500 nm, manufactured by Moriteq Co., Ltd.): | 19 parts by weight |
| PVA405 (Poval, manufactured by Kuraray Co., Ltd.): | 1 part by weight |
| Water: | 80 parts by weight |

After that, but prior to drying, the fine particles 15 on the coated surface was wiped off by means of a doctor blade made of stainless steel to fill the fine particles 15 into the recesses of the first area 13, followed by drying at 120°C for 30 seconds by means of an oven.

After that, aluminum was vapor-deposited onto the entire first principal surface 11A of the fine-relief-formation layer 11 such that the thickness in the smooth-plane portion was 40 nm, thereby providing the reflective layer 12. Then, the resultant was washed in a water bath to obtain the counterfeit prevention structure 30. In the obtained counterfeit prevention structure 30, the reflective layer 12 was arranged covering only the second area 14.

### [Comparative Example 1]

The processes before establishing a reflective layer were carried out in the same manner as in Example 2. Then, a mask layer was pattern-printed onto the resultant by means of a gravure printing method. A "mask-layer ink composition used for gravure printing" was formulated as follows.

### "Mask-layer ink composition used for gravure printing"

| | |
|---|---|
| Vinyl chloride - vinyl acetate copolymer resin: | 50.0 parts by weight |
| Methyl ethyl ketone: | 30.0 parts by weight |
| Ethyl acetate: | 20.0 parts by weight |

The mask layer was prepared so as to provide an even coated surface with a dry thickness of 1.0 to 1.2 µm. The pattern of the mask layer was the same as that of the first area 13. Printing was conducted by aligning the pattern of the mask layer with that of the first area 13 so that the patterns are overlapped with each other.

The comparative product obtained in such a way through the manufacturing method of the conventional art caused a maximum misalignment of 200 µm relative to the first area 13.

### [Evaluation method for the counterfeit prevention structures prepared in the examples and the comparative example]

### <Evaluation on selection and removal of reflective layer>

Regarding Examples 1 and 3, the processing conditions in which the visible-light transmittance in the first area 13 exceeded 90% and the visible-light transmittance in the second area 14 was not more than 20% were indicated by a mark "O", and the processing conditions other than the above were indicated by a mark "X".

Regarding Example 2 and Comparative Example 1, the processing conditions in which the visible-light transmittance in the second area 14 exceeded 90% and the visible-light transmittance in the first area 13 was not more than 20% were indicated by a mark "O", and the processing conditions other than the above were indicated by a mark "X".

In the case where the processing conditions corresponded to the mark "O", if the reflective layer was partially absent, being removed, or if the reflective layer was uneven, the mark "X" was applied.

### <Evaluation on positional accuracy of reflective layer>

Regarding Examples 1 and 3, the positional accuracy of the reflective layer was evaluated on the basis of a maximum misalignment distance of the reflective layer relative to the second area 14. The case where the maximum misalignment distance was less than 20 µm (microns) was indicated by a mark "O", and the case where the maximum misalignment distance was not less than 20 µm (microns) was indicated by a mark "X".

Regarding Example 2 and Comparative Example 1, an evaluation was made on the basis of a maximum misalignment distance of the reflective layer relative to the first area 13. The case where the maximum misalignment distance was less than 50 microns was indicated by a mark "O", and the case where the maximum misalignment distance was not less than 50 microns was indicated by a mark "X".

The examples and the comparative example were evaluated using the above evaluation method. The results are shown in Table 1.

**[Table 1]**

| Configuration | First area Depth-to-width ratio (Depth/width) | Second area Depth-to-width ratio (Depth/width) | Reflective layer Thickness (nm) | Mask layer Thickness (nm) | Selection/ removal of reflective layer | Positional accuracy of reflective layer |
|---|---|---|---|---|---|---|
| Example 1 | 0.5 | 0.1 | 40 | - | ○ | ○ |
| Example 2 | 0.5 | 0.1 | 40 | 350 | ○ | ○ |
| Example 3 | 0.5 | 0.1 | 40 | - | ○ | ○ |
| Comparative Example | 0.5 | 0.1 | 40 | 1100 | X | X |

As shown in Table 1, in the examples, good balance is achieved between the selection/removal of the reflective layer and the positional accuracy thereof. In the configuration of Comparative Example 1 based on the conventional art, performances in the positional accuracy of the reflective layer and the selection/removal of the reflective layer are inferior to those of the products of the present invention.

As described so far, the present invention can provide a counterfeit prevention structure which is provided with an optical element including relief structures, and which enables formation of a reflective layer having a precise pattern with high positional accuracy and is quite unlikely to be counterfeited. Further, the present invention can provide a manufacturing method which is able to form the counterfeit prevention structure at low cost with high productivity.

The foregoing embodiments may be implemented not only singly but also in appropriate combination. The foregoing embodiments include various stages of the invention. Some of the various stages of the invention may be extracted by appropriately combining the plurality of components disclosed in the foregoing embodiments.

### [Industrial Applicability]

The present invention enables provision of a reflective layer with high positional accuracy in an optional pattern, and thus can be used for counterfeit prevention structures having patterned reflective layers of various optical members. In particular, the present invention can be applied to those counterfeit prevention structures which utilize optical elements, the counterfeit prevention structures including, for example, labels, transfer foils, and counterfeit prevention sheets of paper, that are used for preventing counterfeit of valuable certificates or brand products, certificates, or the like.

### [Reference Signs List]

10...Counterfeit prevention structure, 11...Fine-relief-formation layer, 11A...First principal surface, 12...Reflective layer, 13...First area, 14...Second area, 15...Functional fine particles, 16...Etching mask coating, 20, 30...Counterfeit prevention structure.

## Claims

1. A counterfeit prevention structure (10) comprising:
a fine-relief-formation layer (11) that is provided with a first area (13) having an optical element that includes a relief structure whose depth-to-width ratio that is a ratio of a depth relative to a width is not less than a first value, and a second area (14) having an optical element that includes a relief structure whose depth-to-width ratio is less than the first value, and
a reflective layer (12) that is arranged on the relief structure included in the area having the lower light transmittance among said first and second areas,
wherein, the second area (14) having a light transmittance higher than that of the first area (13), said a reflective layer is arranged in recesses of the relief structure included in the first area (13),
and the counterfeit prevention structure (10) further comprises a mask coating (16) that is arranged on the reflective layer (12).

2. The counterfeit prevention structure according to claim 1, wherein the first value is 0.5.

3. A manufacturing method for a counterfeit prevention structure according to claim 1, the method comprising:
forming a first area and a second area, each including a relief structure, in one principal surface of a fine-relief-formation layer;
coating a reflective layer onto the relief structures of the first area and the second area;
coating fine particles onto the reflective layer of the first area and the second area;
removing the fine particles on the reflective layer of the second area, while filling the fine particles into recesses of the relief structure of the first area;
turning the fine particles filled in the recesses of the relief structure of the first area into a film to form a mask coating on the reflective layer of the recesses; and
etching the first area and the second area entirely to thereby remove the reflective layer of the second area but leave the reflective layer of the first area protected by the mask coating.

4. The manufacturing method for a counterfeit prevention structure, according to claim 3, wherein the fine particles each have a core-shell structure, and each shell in the core-shell structure is formed of a polymer that is softened at a predetermined temperature.

5. The manufacturing method for a counterfeit prevention structure according to claim 3, wherein the fine particles contain a polymer, and a part of the polymer exhibits tackiness or loses tackiness with an irradiation of electromagnetic waves.

6. The manufacturing method for a counterfeit prevention structure according to claim 3, wherein the fine particles contain a polymer and are configured to turn into a film at a predetermined temperature.

## Patentansprüche

1. Nachahmungs-Präventions-Struktur (10), umfassend:
eine Fein-Relief-Bildungs-Schicht (11), die mit einem ersten Bereich (13), welcher ein optisches Element aufweist, das eine Reliefstruktur umfasst, deren Tiefe-zu-Breite-Verhältnis ein Verhältnis einer Tiefe relativ zu einer Breite nicht weniger als ein erster Wert ist, und einem zweiten Bereich (14), welcher ein optisches Element aufweist, das eine Reliefstruktur umfasst, deren Tiefe-zu-Breite-Verhältnis weniger als der erste Wert ist, vorgesehen ist, und
eine Reflektionsschicht (12), die auf der Reliefstruktur angeordnet ist, welche in dem Bereich mit der geringeren Lichtdurchlässigkeit aus dem ersten und dem zweiten Bereich umfasst ist,
wobei der zweite Bereich (14) eine höhere Lichtdurchlässigkeit als die des ersten Bereichs (13) aufweist, wobei die Reflektionsschicht in Aussparungen der Reliefstruktur, die in dem ersten Bereich (13) umfasst ist, angeordnet ist,
und die Nachahmungs-Präventions-Struktur (10) ferner eine Maskenbeschichtung (16) umfasst, die an der Reflektionsschicht (12) angeordnet ist.

2. Nachahmungs-Präventions-Struktur nach Anspruch 1, wobei der erste Wert 0,5 ist.

3. Herstellungsverfahren für eine Nachahmungs-Präventions-Struktur nach Anspruch 1, wobei das Verfahren umfasst:
Bilden eines ersten Bereichs und eines zweiten Bereichs, jeder eine Reliefstruktur umfassend, in einer Hauptfläche einer Fein-Relief-Bildungs-Schicht;
Beschichten einer Reflektionsschicht auf den Reliefstrukturen des ersten Bereichs und des zweiten Bereichs;
Beschichten von feinen Partikeln auf die Reflektionsschicht des ersten Bereichs und des zweiten Bereichs;
Entfernen der feinen Partikel auf der Reflektionsschicht des zweiten Bereichs, während eines Füllens der feinen Partikel in Aussparungen der Reliefstruktur des ersten Bereichs;
Umwandeln der in die Aussparungen der Reliefstruktur des ersten Bereichs gefüllten feinen Partikel in einen Film, um eine Maskenbeschichtung auf der Reflektionsschicht der Aussparungen zu bilden; und
vollständiges Ätzen des ersten Bereichs und des zweiten Bereichs, um dadurch die Reflektionsschicht des zweiten Bereichs zu entfernen, aber die Reflektionsschicht des ersten Bereichs durch die Maskenbeschichtung geschützt zu lassen.

4. Herstellungsverfahren für eine Nachahmungs-Präventions-Struktur nach Anspruch 3, wobei die feinen Partikel jeweils eine Kern-Hülle-Struktur aufweisen, und jede Hülle in der Kern-Hülle-Struktur aus einem Polymer gebildet ist, das bei einer vorbestimmten Temperatur aufgeweicht wird.

5. Herstellungsverfahren für eine Nachahmungs-Präventions-Struktur nach Anspruch 3, wobei die feinen Partikel ein Polymer umfassen, und ein Teil des Polymers bei einer Bestrahlung mit elektromagnetischen Wellen Klebrigkeit aufweist oder Klebrigkeit verliert.

6. Herstellungsverfahren für eine Nachahmungs-Präventions-Struktur nach Anspruch 3, wobei die feinen Partikel ein Polymer umfassen und dazu eingerichtet sind, sich bei einer vorbestimmten Temperatur in einen Film umzuwandeln.

## Revendications

1. Structure de prévention de la contrefaçon (10) comprenant :
une couche de formation de relief fin (11) qui est pourvue d'une première zone (13) présentant un élément optique qui comporte une structure en relief dont le rapport profondeur sur largeur qui est un rapport d'une profondeur par rapport à une largeur n'est pas inférieur à une première valeur, et d'une seconde zone (14) présentant un élément optique qui comporte une structure en relief dont le rapport profondeur sur largeur est inférieur à la première valeur, et
une couche réfléchissante (12) qui est agencée sur la structure en relief comprise dans la zone présentant la transmittance de lumière plus faible parmi lesdites première et seconde zones,
dans laquelle, la seconde zone (14) présentant une transmittance de lumière plus élevée que celle de la première zone (13), ladite une couche réfléchissante est agencée dans des évidements de la structure en relief comprise dans la première zone (13),
et la structure de prévention de la contrefaçon (10) comprend en outre un revêtement masque (16) qui est agencé sur la couche réfléchissante (12).

2. Structure de prévention de la contrefaçon (10) selon la revendication 1, dans laquelle la première valeur est de 0,5.

3. Procédé de fabrication d'une structure de prévention de la contrefaçon selon la revendication 1, le procédé comprenant :
la formation d'une première zone et d'une seconde zone, chacune comportant une structure en relief, dans une surface principale d'une couche de formation de relief fin ;
l'étalement d'une couche réfléchissante sur les structures en relief de la première zone et de la seconde zone ;
l'étalement de fines particules sur la couche réfléchissante de la première zone et de la seconde zone ;
le retrait des fines particules sur la couche réfléchissante de la seconde zone, tout en chargeant les fines particules dans des évidements de la structure en relief de la première zone ;
la transformation des fines particules chargées dans les évidements de la structure en relief de la première zone en un film pour former un revêtement masque sur la couche réfléchissante des évidements ; et
la gravure de la première zone et de la seconde zone entièrement pour ainsi retirer la couche réfléchissante de la seconde zone mais laisser la couche réfléchissante de la première zone protégée par le revêtement masque.

4. Procédé de fabrication d'une structure de prévention de la contrefaçon selon la revendication 3, dans lequel les fines particules présentent chacune une structure noyau-enveloppe, et chaque enveloppe de la structure noyau-enveloppe est formée d'un polymère qui est ramolli à une température prédéterminée.

5. Procédé de fabrication d'une structure de prévention de la contrefaçon selon la revendication 3, dans lequel les fines particules contiennent un polymère, et une partie du polymère présente une viscosité ou perd e, viscosité avec une exposition à des ondes électromagnétiques.

6. Procédé de fabrication d'une structure de prévention de la contrefaçon selon la revendication 3, dans lequel les fines particules contiennent un polymère et sont configurées pour se transformer en un film à une température prédéterminée.
